# EUROPÄISCHE PATENTSCHRIFT

(11) **EP 0 726 919 B1**
(45) Veröffentlichungstag und Bekanntmachung des Hinweises auf die Patenterteilung: **06.06.2001**
(21) Anmeldenummer: 94930196.4
(22) Anmeldetag: 20.10.1994
(51) Int. Cl.: C08G 18/08, C08G 18/12

(54) **WÄSSRIGE LACKE UND DEREN VERWENDUNG ZUR HERSTELLUNG VON FÜLLERSCHICHTEN BEI DER AUTOMOBILLACKIERUNG**
AQUEOUS PAINTS AND THEIR USE TO PRODUCE FILLER LAYERS IN AUTOMOBILE PAINTING
PEINTURES AQUEUSES ET LEUR UTILISATION POUR LA REALISATION DE COUCHES DE REMPLISSAGE EN PEINTURE AUTOMOBILE

(30) Priorität: 06.11.1993 DE 4337961
(43) Veröffentlichungstag der Anmeldung: 21.08.1996
(73) Patentinhaber: BASF Coatings Aktiengesellschaft, 48165 Münster (DE)
(72) Erfinder: WEGNER, Egon, D-48143 Münster (DE); GROSS, Lutz-Werner, D-45721 Haltern (DE); STEIN, Ralf, D-48153 Münster (DE)
(74) Vertreter: Fitzner, Uwe, Dr.
(86) Internationale Anmeldenummer: EP9403446
(87) Internationale Veröffentlichungsnummer: WO9512626

(56) Entgegenhaltungen:
- EP-A- 0 548 873
- EP-A- 0 566 953
- WO-A-91/12899

## Beschreibung

Die Erfindung bezieht sich auf wäßrige Lacke und deren Verwendung zur Herstellung von Füllerschichten bei der Automobillackierung.

Automobilkarosserien werden lackiert, indem eine Elektrotauchlackschicht, eine Füllerschicht und eine oder zwei Decklackschichten übereinanderlackiert und in mehreren Einbrennschritten nacheinander eingebrannt werden. üblicherweise wird in einem ersten Schritt die Elektrotauchlackschicht abgeschieden und eingebrannt. Danach wird die eingebrannte Elektrotauchlackschicht mit einer Füllerschicht überlackiert. Diese Füllerschicht wird eingebrannt und mit einer ein- oder zweischichtigen Decklackschicht überlackiert. Schließlich wird die Decklackschicht eingebrannt. Zweischichtige Decklackschichten bestehen aus einem pigmentierten Basislack und einem überlackierten Klarlack. Zweischichtige Decklackierungen werden üblicherweise im Naß- in Naß-Verfahren appliziert, d.h. es wird zunächst eine pigmentierte Basislackschicht hergestellt, die im nicht eingebrannten Zustand mit dem Klarlack überlackiert wird. Anschließend werden die pigmentierte Basislackschicht und die Klarlackschicht gemeinsam eingebrannt. Es ist jedoch auch möglich, beispielsweise die abgeschiedene Elektrotauchlackschicht im nicht eingebrannten Zustand mit einer Füllerschicht überzulackieren und anschließend Elektrotauchlackschicht und Füllerschicht gemeinsam einzubrennen. Dann kann auf die eingebrannte Füllerschicht eine ein- oder zweischichtige Decklackschicht lackiert und eingebrannt werden.

Weiterhin ist es möglich, die Füllerschicht auf eine nicht eingebrannte oder eine eingebrannte Elektrotauchlackschicht zu appplizieren und auf die nicht eingebrannte Füllerschicht die pigmentierte Basislackschicht für eine zweischichtige Decklackierung aufzubringen und anschließend die Füllerschicht und die pigmentierte Basischicht sowie gegebenenfalls die Elektrotauchlackschicht gemeinsam einzubrennen. Auf die eingebrannte pigmentierte Basislackschicht kann dann eine Klarlackschicht aufgebracht und eingebrannt werden.

Bei der Automobillackierung hat die Füllerschicht insbesondere die Aufgabe, Unebenheiten der Elektrotauchlackschicht auszufüllen und abzudecken, um den Untergrund für die nachfolgende Decklackschicht zu egalisieren.

Je besser diese Ausfüllung und Abdeckung von Unebenheiten in der Elektrotauchlackschicht ist, desto besser ist die optische Qualität der Gesamtlackierung. Neben der optischen Qualität sind auch wichtige mechanisch-technologische Eigenschaften der Gesamtlackierung, wie z.B. Korrosionsschutz und vor allem die Resistenz gegen Steinschlag und andere mechanische Angriffe, ganz entscheidend von der Qualität der Füllerschicht abhängig. Eine weitere wichtige Anforderung an die Füllerschicht beruht darauf, daß die Glasscheiben einer Automobilkarosserie in die Fensterrahmen der Karosserie eingeklebt werden, wobei oft die Füllerschicht als Untergrund dient. Es ist nun von großer Bedeutung für die Haltbarkeit der Scheibenverklebung, daß der eingesetzte Klebstoff auf der Füllerschicht so gut haftet, daß er sich selbst unter extremen Witterungsbedingungen nicht von der Füllerschicht ablöst.

Aus der DE-A-40 05 961 sind wäßrige Lacke bekannt, die als Bindemittel ein wasserverdünnbares Polyurethanharz enthalten und die zur Herstellung von Füllerschichten geeignet sind. Die mit diesen Lacken hergestellten Füllerschichten sind hinsichtlich ihrer Eignung als Substrat für die Verklebung von Fensterscheiben in Fahrzeugkarosserien verbesserungsbedürftig.

Das Dokument WO-A-91/12899 beschreibt wasserverdünnbare Polyurethanharze, die zur Herstellung von Füllerschichten geeignet sind. Diese Harze werden durch Umsetzung eines Polyesters und/oder eines Polyethers mit einer Verbindung, die mindestens eine gegenüber Isocyanatgruppen reaktive und mindestens eine zur Anionenbildung befähigte Gruppe im Molekül aufweist, eines Polyisocyanats und einer Hydroxy- und/oder Aminogruppe enthaltenden Verbindung hergestellt. Die gleichzeitige Verwendung eines Blockierungsmittels und einer Hydroxy- und Aminogruppen enthaltenden Verbindung ist nicht offenbart.

Die der vorliegenden Erfindung zugrundeliegende Aufgabenstellung besteht in der Bereitstellung von wäßrigen Lacken, die zur Herstellung von Füllerschichten bei der Automobillackierung geeignet sind und die sich insbesondere dadurch auszeichnen, daß sie Füllerschichten liefern, die als Untergrund für das Verkleben von Fensterscheiben in Fahrzeugkarosserien so gut geeignet sind, daß die Verklebung der Fensterscheiben auch durch starke Belastung, wie z.B. starke Feuchtigkeits- und Temperaturschwankungen nicht geschwächt wird.

Diese Aufgabe wird überraschenderweise durch die Bereitstellung von wäßrigen, wenigstens ein wasserverdünnbares Polyurethanharz als Bindemittel enthaltenden Lacken gelöst, die dadurch gekennzeichnet sind, daß das wasserverdünnbare Polyurethanharz herstellbar ist, indem in einer ersten Stufe
(a) ein Diisocyanat oder ein Gemisch aus Diisocyanaten und
(b) eine Verbindung, die mindestens eine gegenüber Isocyanatgruppen reaktive und mindestens eine zur Anionenbildung befähigte saure Gruppe im Molekül aufweist oder ein Gemisch aus solchen Verbindungen und
(c) gegebenenfalls ein Polyester- und/oder Polyetherpolyol mit einem zahlenmittleren Molekulargewicht von 400 bis 5000 oder ein Gemisch aus solchen Polyester- und/oder Polyetherpolyolen und
(d) gegebenfalls ein Polyol mit einem zahlenmittleren Molekulargewicht von 60 bis 399 oder ein Gemisch aus solchen Polyolen
   zu einem isocyanatgruppenhaltigen Präpolymeren (I) umgesetzt werden, wobei die Komponenten (a), (b), (c) und (d) in einem solchen Mengenverhältnis miteinander umgesetzt werden, daß die Isocyanatgruppen und die gegenüber Isocyanatgruppen reaktiven Gruppen in einem Äquivalentverhältnis von 1,04:1,00 bis 10,00:1,00 vorliegen und das aus (a), (b), (c), (d), (e), (f) und (g) hergestellte Polyurethanharz eine Säurezahl von 18 bis 70 aufweist, in einer zweiten Stufe ein Teil der im Präpolymeren (I) enthaltenen freien Isocyanatgruppen mit
(e) einem Blockierungsmittel oder einer Mischung aus Blockierungsmitteln
   umgesetzt wird, so daß ein blockierte Isocyanatgruppen enthaltendes Präpolymer (II) entsteht, wobei die Komponente (e) in einer solchen Menge eingesetzt wird, daß das Präpolymer (II) im statistischen Mittel mindestens noch eine freie Isocyanatgruppe pro Molekül enthält, das Präpolymer (II) mit
(f) 2,0 - 400 Gew.-%, bezogen auf die Menge an Präpolymer (II), eines aus einer Mischung aus Polyisocyanaten mit im statistischen Mittel mehr als 2,0 Isocyanatgruppen pro Molekül, welche frei von zur Anionenbildung befähigten sauren Gruppen sind, und der Komponente (e) hergestellten teilblockierten Polyisocyanates vermischt wird, das Präpolymer (II) und Komponente (f) mit
(g) einer Verbindung, die mindestens eine primäre oder sekundäre Aminogruppe und mindestens eine Hydroxylgruppe im Molekül enthält oder einer Mischung aus solchen Verbindungen
   zu einem Polyurethanharz umgesetzt wird, wobei die Komponente (g) in einer solchen Menge eingesetzt wird, daß die freien Isocyanatgruppen des Präpolymeren (II) und Komponente (f), die Aminogruppen der Komponente (g) und die Hydroxylgruppen der Komponente (g) in einem Äquivalentverhältnis von 1,00:0,15 bis 5,00:0,15 bis 5,00 stehen und schließlich das so hergestellte Polyurethanharz durch zumindest teilweise Neutralisation der zur Anionenbildung befähigten sauren Gruppen in ein wasserverdünnbares Polyurethanharz überführt wird.

Die erfindungsgemäß bereitgestellten wäßrigen Lacke können in jedem Verfahren zur Lackierung von Automobilkarosserien, bei dem eine Elektrotauchlackschicht, eine Füllerschicht und ein oder zwei Decklackschichten übereinanderlackiert und in mehreren Einbrennschritten nacheinander eingebrannt werden, zur Herstellung der Füllerschicht eingesetzt werden. Die mit den erfindungsgemäßen wäßrigen Lacken hergestellten Füllerschichten zeichnen sich nicht nur dadurch aus, daß sie die Unebenheiten des Untergrundes sehr gut abdecken und gute mechanisch-technologische Eigenschaften aufweisen, sondern auch durch ihre guten Eigenschaften als Substrate für die Verklebung von Fensterscheiben in Automobilkarosserien.

Zur Herstellung der in den erfindungsgemäßen Lacken enthaltenen Polyurethanharze werden in einer ersten Stufe
(a) ein Diisocyanat oder ein Gemisch aus Diisocyanaten und
(b) eine Verbindung, die mindestens eine gegenüber Isocyanatgruppen reaktive und mindestens eine zur Anionenbildung befähigte saure Gruppe im Molekül aufweist oder ein Gemisch aus solchen Verbindungen und
(c) gegebenenfalls ein Polyester- und/oder Polyetherpolyol mit einem zahlenmittleren Molekulargewicht von 400 bis 5000 oder ein Gemisch aus solchen Polyester- und/oder Polyetherpolyolen und
(d) gegebenfalls ein Polyol mit einem zahlenmittleren Molekulargewicht von 60 bis 399 oder ein Gemisch aus solchen Polyolen
   zu einem isocyanatgruppenhaltigen Präpolymeren (I) umgesetzt, wobei die Komponenten (a), (b), (c) und (d) in einem solchen Mengenverhältnis miteinander umgesetzt werden, daß die Isocyanatgruppen und die gegenüber Isocyanatgruppen reaktiven Gruppen in einem Äquivalentverhältnis von 1,04:1,00 bis 10,00:1,00 vorliegen und das aus (a), (b), (c), (d), (e), (f) und (g) (die Komponenten (e), (f) und (g) werden weiter unten beschrieben) hergestellte Polyurethanharz eine Säurezahl von 18 bis 70 aufweist.
   Die Umsetzung der Komponenten (a), (b), (c) und (d) erfolgt nach gut bekannten Methoden der Polyurethanchemie in Substanz oder einem organischen Lösemittel, vorzugsweise in Gegenwart von Katalysatoren wie z.B. Dibutylzinndilaurat, Dibutylzinnmaleat, tertiären Aminen usw.
   Als Komponente (a) können aliphatische und/oder cycloaliphatische und/oder aromatische und/oder araliphatische Diisocyanate eingesetzt werden. Als Beispiele für aromatische und araliphatische Diisocyanate werden Phenylendiisocyanat, Toluylendiisocyanat, Xylylendiisocyanat, Biphenylendiisocyanat, Naphtylendiisocyanat, Diphenylmethandiisocyanat und Tetramethylxyloldiisocyanat (TMXDI) genannt. Aufgrund ihrer guten Beständigkeit gegenüber ultraviolettem Licht ergeben (cyclo)aliphatische Diiso-cyanate Produke mit geringer Vergilbungsneigung. Beispiele für cycloaliphatische Diisocyanate sind Isophorondiisocyanat, Cyclopentylendiisocyanat sowie die Hydrierungsprodukte der aromatischen Diisocyanate wie Cyclohexylendiisocyanat, Methylcyclohexylendiisocyanat und Dicyclohexylmethandiisoyanat. Aliphatische Diisocyanate sind Verbindungen der Formel

   OCN - (CR³ ₂)ᵣ-NCO

   worin r eine ganze Zahl von 2 bis 20, insbesondere 6 bis 8 ist und R³, das gleich oder verschieden sein kann, Wasserstoff oder einen niedrigen Alkylrest mit 1 bis 8 C-Atomen, vorzugsweise 1 oder 2 c-Atomen darstellt. Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethyldiisocyanat, Methyltrimethylendiisocyanat und Trimethylhexandiisocanat. Isophorondiisocyanat und Dicyclohexylmethandiisocyanat werden bevorzugt eingesetzt.
   Die Komponente (a) muß hinsichtlich der Funktionalität der Polyisocyanate so zusammengesetzt sein, daß kein vernetztes Polyurethanharz erhalten wird. Die Komponente (a) kann neben Diisocyanaten auch einen Anteil an Polyisocyanaten mit Funktionalitäten über zwei - wie z.B. Triisocyanate - enthalten. Eine Senkung der mittleren Funtionalität der Komponente (a) kann durch Zugabe von Monoisocyanaten wie z.B. Phenylisocyanat, Cyclohexylisocyanat und Stearylisocyanat erreicht werden. Als Triisocyanate haben sich Produkte bewährt, die durch Trimerisation oder Oligomerisation von Diisocyanaten oder durch Reaktion von Diisocyanaten mit Verbindungen, die mehrere OH- oder NH-Gruppen enthalten, entstehen. Hierzu gehören beispielsweise das Biuret von Hexamethylendiisocyanat und Wasser, das Isocyanurat des Hexamethylendiisocyanats oder das Addukt von Isophorondiisocyanat an Trimethylolpropan.
   Als Komponente (b) werden vorzugsweise Verbindungen eingesetzt, die zwei gegenüber Isocyanatgruppen reaktive Gruppen und eine zur Anionenbildung befähigte saure Gruppe im Molekül enthalten. Geeignete gegenüber Isocyanatgruppen reaktive Gruppen sind insbesondere Hydroxylgruppen sowie primäre und/oder sekundäre Aminogruppen. Geeignete zur Anionenbildung befähigte Gruppen sind Carboxyl-, Sulfonsäure- und/oder Phosphonsäuregruppen, wobei Carboxylgruppen bevorzugt sind. Als Komponente (b) können beispielsweise Alkansäuren mit zwei Substituenten am α-ständigen Kohlenstoffatom eingesetzt werden. Der Substituent kann eine Hydroxylgruppe, eine Alkylgruppe oder bevorzugt eine Alkylolgruppe sein. Diese Alkansäuren haben mindestens eine, im allgemeinen 1 bis 3 Carboxylgruppen im Molekül. Sie haben zwei bis etwa 25, vorzugsweise 3 bis 10 Kohlenwasserstoffatome. Beispiele für die Komponente (b) sind Dihydroxypropionsäure, Dihydroxybernsteinsäure und Dihydroxybenzoesäure. Eine besonders bevorzugte Gruppe von Alkansäuren sind die α,α-Dimethylolalkansäuren der allgemeinen Formel R⁴-C(CH₂OH)₂COOH, wobei R⁴ für ein Wasserstoffatom oder eine Alkylgruppe mit bis zu etwa 20 Kohlenstoffatomen steht. Beispiele für solche Verbindungen sind 2,2-Dimethylolessigsäure, 2,2-Dimethylolpropionsäure, 2,2 Dimethylolbuttersäure und 2,2-Dimethylolpentansäure. Die bevorzugte Dihydroxyalkansäure ist 2,2 Dimethylolpropionsäure. Aminogruppenhaltige Verbindungen sind beispielsweise 2,5-Diaminovaleriansäure, 3,4-Diaminobezoesäure, 2,4-Diaminotoluolsulfonsäure und 2,4-Diaminodiphenylethersulfonsäure.
   Als Komponente (c) können gesättigte und ungesättige Polyester- und/oder Polyetherpolyole, insbesondere Polyester- und/oder Polyetherdiole mit einem zahlenmittleren Molekulargewicht von 400 bis 5000 eingesetzt werden. Geeignete Polyetherdiole sind z.B. Polyetherdiole der allgemeinen Formel H(-0-(CHR¹)ₙ-)ₘOH, wobei R¹ = Wasserstoff oder ein niedriger, gegebenenfalls substituierter Alkylrest ist, n = 2 bis 6, bevorzugt 3 bis 4 und m = 2 bis 100, bevorzugt 5 bis 50 ist. Als Beispiele werden lineare oder verzweigte Polyetherdiole wie Poly(oxyethylen)glykole, Poly(oxypropylen)glykole und Poly(oxybutylen)glykole genannt. Die ausgewählten Polyetherdiole sollen keine übermäßigen Mengen an Ethergruppen einbringen, weil sonst die gebildeten Polymere in Wasser anquellen. Die bevorzugten Polyetherdiole sind Poly(oxypropylen)glykole im zahlenmittleren Molmassenbereich Mₙ von 400 bis 3000.
   Polyesterdiole werden durch Veresterung von organischen Dicarbonsäuren oder ihren Anhydriden mit organischen Diolen hergestellt oder leiten sich von einer Hydroxycarbonsäure oder einem Lacton ab. Um verzweigte Polyesterpolyole herzustellen, können in geringem Umfang Polyole oder Polycarbonsäuren mit einer höheren Wertigkeit eingesetzt werden. Die Dicarbonsäuren und Diole können lineare oder verzweigte aliphatische, cycloaliphatische oder aromatische Dicarbonsäuren oder Diole sein.
   Die zur Herstellung der Polyester verwendeten Diole bestehen beispielsweise aus Alkylenglykolen, wie Ethylenglykol, Propylenglykol, Butylenglykol, Butandiol-1,4, Hexandiol-1,6, Neopentylglykol und anderen Diolen, wie Dimethylolcyclohexan. Es können jedoch auch kleine Mengen an Polyolen, wie Trimethylolpropan, Glycerin und Pentaerythrit, zugesetzt werden. Die Säurekomponente des Polyesters besteht in erster Linie aus niedermolekularen Dicarbonsäuren oder ihren Anhydriden mit 2 bis 44, bevorzugt 4 bis 36 Kohlenstoffen im Molekül. Geeignete Säuren sind beispielsweise o-Phthalsäure, Isophthalsäure, Terephthalsäure, Tetrahydrophthalsäure, Cyclohexandicarbonsäure, Bernsteinsäure, Isododecylbernsteinsäure, Adipinsäure, Azealinsäure, Sebazinsäure, Maleinsäure, Fumarsäure, Glutarsäure, Hexachlorheptandicarbonsäure, Tetrachlorphthalsäure und/oder dimerisierte Fettsäuren. Anstelle dieser Säure können auch ihre Anhydride, soweit diese existieren, verwendet werden. Bei der Bildung von Polyesterpolyolen können auch kleinere Mengen an Carbonsäuren mit 3 oder mehr Carboxylgruppen, beispielsweise Trimellithsäureanhydrid oder Addukte von Maleinsäureanhydrid an ungesättigte Fettsäuren anwesend sein.
   Es können Polyesterdiole eingesetzt werden, die durch Umsetzung eines Lactons mit einem Diol erhalten werden. Sie zeichnen sich durch die Gegenwart von endständigen Hydroxylgruppen und wiederkehrenden Polyesteranteilen der Formel (-CO-(CHR²)ₙ-CH₂-0) aus. Hierbei ist n bevorzugt 4 bis 6 und der Sustituent R² = Wasserstoff, ein Alkyl-, Cycloalkyl- oder Alkoxy-Rest. Kein Substituent enthält mehr als 12 Kohlenstoffatome. Die gesamte Anzahl der Kohlenstoffatome im Substituenten übersteigt 12 pro Lactonring nicht. Beispiele hierfür sind Hydroxycapronsäure, Hydroxybuttersäure, Hydroxydecansäure und/oder Hydroxystearinsäure.
   Für die Herstellung der Polyesterdiole wird das unsubstituierte ε-Caprolacton, bei dem n den Wert 4 hat und alle R²-Substituenten Wasserstoff sind, bevorzugt. Die Umsetzung mit Lacton wird durch niedermolekulare Polyole wie Ethylenglykol, 1,3-Propandiol, 1,4-Butandiol, Dimethylolcyclohexan gestartet. Es können jedoch auch andere Reaktionskomponenten, wie Ethylendiamin, Alkyldialkanolamine oder auch Harnstoff mit Caprolacton umgesetzt werden.
   Als Komponente (d) können beispielsweise Polyole wie Ethylenglykol, Diethylenglykol, Triethylenglykol, 1,2-Propandiol, 1,3-Propandiol, 1,4-Butandiol, 1,2-Butylenglykol, 1,6-Hexandiol, Trimethylolpropan, Ricinusöl oder hydriertes Ricinusöl, Di-trimethylolpropanether, Pentaerythtrit, 1,2-Cyclohexandiol, 1,4-Cyclohexandimethanol, Bisphenol A, Bisphenol F, Neopentylglykol, Hydroxypivalinsäureneopentylglykolester, hydroxyethyliertes oder hydroxypropyliertes Bisphenol A, hydriertes Bisphenol A und deren Mischungen eingesetzt werden. Die Polyole werden im allgemeinen in Mengen von 0 bis 30 Gewichtsprozent, vorzugsweise 0 bis 20 Gewichtsprozent, bezogen auf die eingesetzte Menge an Komponente (c) und (d) eingesetzt.
   In einer zweiten Stufe wird ein Teil der im Präpolymeren (I) enthaltenen freien Isocyanatgruppen mit
(e) einem Blockierungsmittel oder einer Mischung aus Blockierungsmitteln
   umgesetzt, so daß ein blockierte Isocyanatgruppen enthaltendes Präpolymer (II) entsteht, wobei die Komponente (e) in einer solchen Menge eingesetzt wird, daß das Präpolymer (II) im statistischen Mittel mindestens noch eine freie Isocyanatgruppe pro Molekül enthält.
   Die Umsetzung des Präpolymeren (I) mit der Komponente (e) wird nach den gut bekannten Verfahren der Polyurethanchemie, vorzugsweise in einem organischen Lösemittel durchgeführt.
   Als Komponente (e) können im Prinzip alle für Polyisocyanate geeigneten Blockierungsmittel eingesetzt werden. Als Beispiele werden genannt: Aliphatische Monoether von Alkandiolen, wie Ethyl-, Propyl- und Butylglykol; aliphatische Monoalkohole mit 1 bis 4 C-Atomen im Molekül wie Methanol, Ethanol, Propanol und Butanol, cycloaliphatische Monoalkohole, wie Cyclohexanol; aromatische Alkylalkohole, wie Phenylcarbinol; Phenolverbindungen, wie Phenol selbst und substituierte Phenole, wie Cresol, Nitrophenol, Chlorphenol und Ethylphenol; Amine, wie Di-n-butylamin, Di-sec.-butylamin, Dicyclohexylamin, Piperidin, 2-Methylpiperidin und 2,6-Dimethylpiperidin; Oxime, wie Acetonoxim, Butanonoxim, Diethylketoxim, Methylisobutylketoxim, Diisopropylketoxim, Cyclohexanonoxim, 2-Methylcyclohexanonoxim, 2,6-Dimethylcyclohexanonoxim, Acetophenonoxim; Lactame, wie ε-Caprolactam und CH-acide Verbindungen, wie Dialkylmalonate, Alkylacetoacetate, Acetylaceton; heterocyclische Verbindungen, wie Furfurylalkohol usw.
   Als Komponente (e) werden vorzugsweise Oxime, wie Acetonoxim, Butanonoxim, Diehtylketoxim, Methylisobutylketoxim, Diisopropylketoxim, Cyclohexanonoxim, 2-Methylcyclohexanonoxim, 2,6-Dimethylcyclohexanonoxim und Acetophenonoxim, besonders bevorzugt Butanonoxim eingesetzt.
   Bevor das Präpolymer (II) mit der Komponente (g) weiter umgesetzt wird, kann es mit
(f) 2,0 - 400 Gew.-%, bezogen auf die Menge an Präpolymer (II), eines aus einer Mischung aus Polyisocyanaten mit im statistischen Mittel mehr als 2,0 Isocyanatgruppen pro Molekül, welche frei von zur Anionenbildung befähigten sauren Gruppen sind, und der Komponente (e) hergestellten teilblockierten Polyisocyanates
   vermischt werden.
   Die Herstellung von teilblockierten Polyisocyanaten ist dem Fachmann gut bekannt. Als Komponente (f) wird vorzugsweise ein teilblockiertes Polyisocyanat, das im statistischem Mittel noch mindestens eine freie Isocyanatgruppe pro Molekül enthält eingesetzt. Die Mischung aus Präpolymer (II) und Komponente (f) kann hergestellt werden, indem die Komponente (f) separat hergestellt wird und mit dem Präpolymer (II) vermischt wird. Sie wird vorzugsweise hergestellt, indem das Präpolymer (II) mit einer entsprechenden Menge eines Polyisocyanates, das im statistischen Mittel mehr als 2,0 Isocyanatgruppen pro Molekül enthält und frei von zur Anionenbildung befähigten sauren Gruppen ist nämlich eine Mischung aus solchen Polyisocyanaten vermischt wird und anschließend ein Teil der Isocyanatgruppen des zugesetzten Polyisocyanatgemisches in Gegenwart des Präpolymeren (II) mit dem Blockierungsmittel (e) umgesetzt wird. Das Polyisocyanatgemisch kann zur Herstellung der Mischung aus Präpolymer (II) und Komponente (f) auch schon vor bzw. während der Umsetzung des Präpolymeren (I) mit der Komponente (e) zum Präpolymeren (II) bzw. dem Reaktionsgemisch aus Präpolymer (I) und Komponente (e) zugegeben werden. Diese Verfahrensweise ist jedoch, insbesondere dann, wenn die Reaktivität der Isocyanatgruppen im Präpolymeren (I) und im Polyisocyanat bzw. Polyisocyanatgemisch gegenüber der Komponente (e) sehr unterschiedlich ist, weniger bevorzugt.
   Polyisocyanate, die im statistischen Mittel mehr als 2,0 Isocyanatgruppen pro Molekül enthalten und frei von zur Anionenbildung befähigten sauren Gruppen sind, sind bekannt. Als Beispiele für derartige Polyisocyanate werden durch Trimerisation oder Oligomerisation von Diisocyanaten oder durch Reaktion von Diisocyanaten mit polyfunktionellen Polyolen oder Polyaminen erhaltene Verbindungen genannt. Hierzu gehören beispielsweise das Biuret von Hexamethylendiisocyanat und Wasser, das Isocyanurat des Hexamethylendiisocyanats oder das Addukt von Isophorondiiscocyanat an Trimethylolpropan.
   Das Präpolymer (II) und Komponente (f) wird in einem weiteren Reaktionsschritt mit
(g) einer Verbindung, die mindestens eine primäre oder sekundäre Aminogruppe und mindestens eine Hydroxylgruppe im Molekül enthält oder einer Mischung aus solchen Verbindungen
   zu einem Polyurethanharz umgesetzt, wobei die Komponente (g) in einer solchen Menge eingesetzt wird, daß die freien Isocyanatgruppen des Präpolymeren (II) bzw. die freien Isocyanatgruppen der Mischung aus Präpolymer (II) und Komponente (f), die Aminogruppen der Komponente (g) und die Hydroxylgruppen der Komponente (g) in einem Äquivalentverhältnis von 1,00:0,15 bis 5,00:0,15 bis 5,00, vorzugsweise 1,00:0,25 bis 3,00:0,25 bis 3,00, besonders bevorzugt 1,00:0,33 bis 2,00:0,33 bis 2,00 stehen. Anschließend wird das so hergestellte Polyurethanharz durch zumindest teilweise Neutralisation der zur Anionenbildung befähigten sauren Gruppen in ein wasserverdünnbares Polyurethanharz überführt.
   Die Umsetzung mit der Komponente (g) wird nach allgemein gut bekannten Methoden der Polyurethanchemie, vorzugsweise in einem organischen Lösemittel durchgeführt.
   Als Komponente (g) kann im Prinzip jede Verbindung, die mindestens eine primäre oder sekundäre Aminogruppe und mindestens eine Hydroxylgruppe im Molekül enthält oder eine Mischung aus solchen Verbindungen eingesetzt werden. Als Beispiele für derartige Verbindungen werden genannt:
   Ethanolamin, Propandiolamin, N-Methylethanolamin, N-Ethylethanolamin, N-Methylpropanolamin, N-Ethylpropanolamin, Diethanolamin, Dipropanolamin und N-Hydroxyethylaminobenzol sowie N-Hydroxyethylethylendiamin, N-Hydroxyethylpropylendiamin, N-Hydroxypropylethylendiamin, N-Hydroxypropylpropylendiamin, N,N'-Dihydroxyethylethylendiamin, N,N'-Dihydroxyethylpropylendiamin, N,N'-Dihydroxypropylethylendiamin, N,N'-Dihydroxypropylpropylendiamin sowie ethoxyliertes N,N'-Bis (3-aminopropyl) ethylendiamin und ethoxyliertes 4-Aminomethyl-1,8-octandiamin.
   Um das auf die obenbeschriebene Art und Weise hergestellte Polyurethanharz in eine wasserverdünnbare Form zu überführen, wird wenigstens ein Teil der in dem Polyurethanharz enthaltenen zur Anionenbildung befähigten sauren Gruppen neutralisiert. Zur Neutralisation werden vorzugsweise flüchtige Amine eingesetzt. Hierbei sind die tertiären Amine bevorzugt, während Amoniak und primäre und sekundäre Amine weniger bevorzugt sind. Beispiele für geeignete Amine sind Trimethylamin, Triethylamin, Triisopropylamin, Tributylamin, N-Methylmorpholin, N-Methylpiperazin, N,N-Dimethylethanolamin, N,N-Diethylethanolamin, Triethanolamin, N-Methyldiethanolamin, Dimethylaminopropanol, und N-Hydroxyethylpiperazin.
   Der Fachmann kann unter Verwendung der auf die obenbeschriebene Art und Weise hergestellten wasserverdünnbaren Polyurethanharze unter Zuhilfenahme seines Fachwissens wäßrige Lacke formulieren, die zur Herstellung von Füllerschichten bei der Automobillackierung geeignet sind und die die obenbeschriebenen Vorteile aufweisen. Er kann dabei die erfindungsgemäß einzusetzenden wasserverdünnbaren Polyurethanharze mit anderen wasserverdünnbaren Bindemitteln, wie z.B. Polyesterharzen und/oder Aminoplastharzen und/oder Epoxidharzen und/oder Polyacrylatharzen usw. kombinieren. Beispiele für Kombinationsbindemittel (wobei unter Bindemittel sowohl "Hauptbindemittel" als auch "Vernetzungsmittel" verstanden werden), werden beispielsweise in folgenden Patentdokumenten offenbart: DE-A-40 05 961, EP-A-330 139, EP-A-339 433 und DE-A-33 18 595. Es ist bevorzugt, daß die erfindungsgemäßen wäßrigen Lacke neben dem erfindungsgemäß eingesetzten wasserverdünnbaren Polyurethanharz noch ein wasserverdünnbares Polyesterharz und ggf. zusätzlich ein Aminoplastharz enthalten.
   Dabei ist es besonders bevorzugt, das erfindungsgemäße wasserverdünnbare Polyurethanharz in einer Menge von 30 bis 70, vorzugsweise 30 bis 60 Gew.-%, das wasserverdünnbare Polyesterharz in einer Menge von 15 bis 60, vorzugsweise 30 bis 60 Gew.-% und das Aminoplastharz in einer Menge von 5 bis 35, vorzugsweise 5 bis 25 Gew.-% einzusetzen, wobei die Gew.-%-Angaben auf die Gesamtmenge an wasserverdünnbarem Polyurethanharz, wasserverdünnbarem Polyesterharz und Aminoplastharz = 100 Gew.-% bezogen sind. Als Aminoplastharze werden Melamin- und/oder Benzoguanaminharze eingesetzt. Derartige Harze sind für die Lackherstellung üblich und in großer Auswahl auf dem Markt erhältlich. Die erfindungsgemäßen wäßrigen Lacke können neben den obenbeschriebenen Bindemitteln auch noch gebräuchliche Pigmente, Füllstoffe, Weichmacher, Stabilisatoren, Netzmittel, Dispergierhilfsmittel, Verlaufshilfsmittel, Entschäumer, Katalysatoren usw. enthalten.
   Die erfindungsgemäßen Lacke können nach an sich bekannten Methoden, beispielsweise durch Spritzen, Streichen, Tauchen, Fluten, Rakeln oder Walzen auf beliebige Substrate, wie z.B. Metalle, Kunststoffe, Holz- oder Glas, appliziert werden. Sie werden vorzugsweise durch Spritzen zur Herstellung von Füllerschichten bei der Automobillackierung eingesetzt.
   Die Erfindung wird in den folgenden Beispielen näher erläutert. Alle Angaben über Teile und Prozentsätze sind Gewichtsangaben, falls nicht ausdrücklich etwas anderes angegeben wird.

### 1. Herstellung von erfindunsgemäß eingesetzten wasserverdünnbaren Polyurethanharzen

### 1.1 Polyurethanharz I

In einen trockenen Reaktionskessel mit Thermometer und Rückflußkühler werden unter Stickstoff 383,6 g einer 73 %igen Lösung eines Polyesterpolyols (Säurezahl: 3,5 bis 4,0, hergestellt aus 39,5 Gewichtsteilen dimerisierter Fettsäure (Pripol® 1013, Hersteller: Unichema) 21,7 Gewichtsteilen Hexandiol-1,6 und 11,7 Gewichtsteilen Isophtalsäure) in Methylethylketon, 26,8 g Dimethylolpropionsäure, 157,2 g Dicyclohexylmethandiisocyanat (Desmodur® W, Hersteller: Bayer AG) und 95,3 g Methylethylketon eingewogen und auf 78 °C erwärmt. Diese Temperatur wird so lange gehalten, bis ein NCO-Gehalt von 2,5 bis 2,6 % erreicht ist. Dann werden 17,4 g Butanonoxim zugetropft und die Reaktionstemperatur wird für weitere zwei Stunden bei 78 °C gehalten. Dann werden nacheinander 56,7 g eines trimerisierten Hexamethylendiisocyanates (Basonat® PLR 8638, Hersteller: BASF AG) und 17,4 g Butanonoxim zugegeben. Nachdem das Reaktionsgemisch eine weitere Stunde lang bei 78 °C gehalten worden ist, werden zur Umsetzung der noch verbliebenen NCO Gruppen 10,6 g Diethanolamin zugegeben und das Reaktionsgemisch noch so lange bei 78 °C gehalten, bis keine freien NCO-Gruppen mehr nachweisbar sind. Zur Überführung des so hergstellten Polyurethanharzes in eine wasserverdünnbare Form werden bei 78 °C nacheinander 56,6 g Butyldiglykol, 15,3 g Dimethylethanolamin und 743 g destilliertes Wasser zugegeben. Aus der so erhaltenen wäßrigen Dispersion wird anschließend das Methylethylketon bei 50 bis 60 °C im Vakuum abdestilliert.Dann wird der pH-Wert der Dispersion mit Dimethylethanolamin auf 7,0 bis 7,4 und der Feststoffgehalt der Dispersion mit destilliertem Wasser auf 41,7 Gew,-% eingestellt.

### 2. Herstellung eines wasserverdünnbaren Polyesterharzes

In einen Reaktor, der mit einer Füllkörperkolonne, einem Kolonnenkopfaufsatz und einem Kolonnenkopfthermometer ausgestattet ist, werden unter Stickstoff 199,2 g Isododecenylbernsteinsäureanhydrid, 471,7 g Neopentylglykol, 114,0 g Tetrahydrophthalsäureanhydrid, 130,0 g Isopthalsäure und 23,0 g Toluol eingewogen und langsam unter Rühren auf max. 220 ° erwärmt. Hierbei soll die Kolonnenkopftemperatur 105 °C nicht übersteigen. Die Kondensationsreaktion wird bis zu einer Säurezahl von 10 bis 14 durchgeführt und anschließend wird das Schleppmittel abdestilliert. Bei 160 °C werden dann 215,7 g Trimellithsäureanhydrid zugegeben und bei 170 °C wird bis zu einer Säurezahl von 52 kondensiert. Anschließend wird auf 120 °C abgekühlt und mit 126,6 g Butylglykol und 68,0 g Dimethylethanolamin versetzt. Nach Abkühlung auf eine Temperatur unter 100 °C wird mit 1549 g destilliertem Wasser verdünnt und mit Dimethylethanolamin und weiterem destillierten Wasser auf einen pH-Wert von 7,2 und einen Feststoffgehalt von 41,0 Gew,-% eingestellt.

### 3. Herstellung erfindungsgemäßer wäßriger Lacke

Gemäß den in Tabelle 1 angegebenen Gewichtsteilen wird die obenbeschriebene wäßrige Polyesterdispersion mit entionisiertem Wasser, mit einer Lösung eines handelsüblichen Antischaummittels auf Basis eines ungesättigten verzweigten Diols, gelöst in Butyldiglykol sowie N,N-Dimethylethanolamin versetzt und mit nachbehandeltem Titandioxid vom Rutiltyp und handelsüblichem, feinteiligen Bariumsulfat, oberflächenbehandeltem Talkum und einem handelsüblichen Flammruß angepastet. Diese Mischungen werden in eine diskontinuierliche Laborsandmühle gfüllt und dispergiert, bis eine Feinheit von max. 12 µm im Grindometer nach Hegmann erreicht ist.

Aus den Dispergiermischungen werden dann unter Zusatz der obenbeschriebenen Polyurethanharzdispersionen, niedrig molekularem, mit Methanol hochverethertem Melaminharz (Cymel® 301, American Cyanamid Company), einem handelsüblichen Verlaufsmittel auf Basis eines wasserverdünnbaren Acrylatharzes und Butyldiglycol wäßrige Lacke hergestellt, die mit N,N Dimethylethanolamin auf einem pH-Wert von 7,2 bis 7,5 und mit deionisiertem Wasser auf eine Spritzviskosität von 33 sec (DIN 4) eingestellt werden.

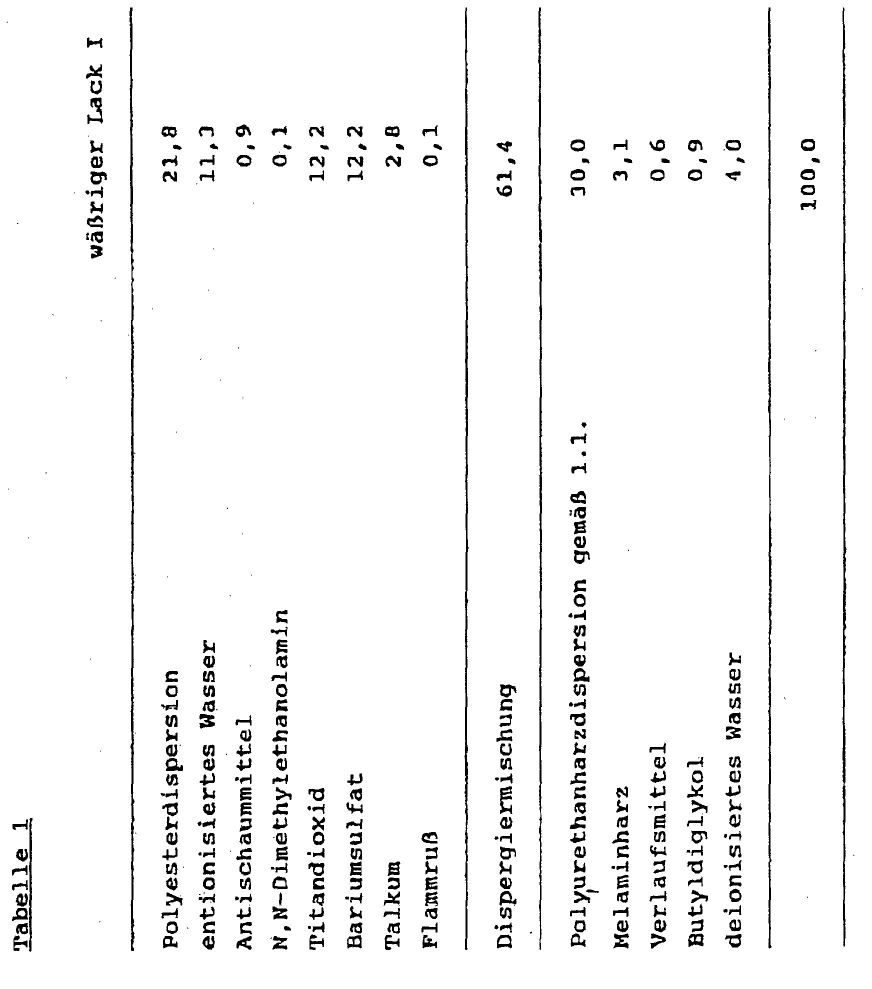

### 4. Applikation der erfindungsgemäßen wäßrigen Lacke und Prüfung der erhaltenen Lackfilme

Die erfindungsgemäßen Lacke werden mit einer Fließbecherpistole (Düsenöffnung 1,2 mm; Luftdruck 4,5 bar) in zwei Kreuzgängen mit einer Zwischenablüftzeit von einer Minute auf mit einer handelsüblichen Elektrotauchlackierung beschichtete phosphatierte Stahlbleche gespritzt.Die Applikation erfolgte bei einer Lufttemperatur von 23 °C und einer relativen Luftfeuchte von 60 %. Die gespritzten Tafeln wurden 10 min bei 23 °C und anschließend 10 min bei 80 °C in einem Umluftofen abgelüftet und dann 20 min bei 160 °C in einem Umluftofen eingebrannt, abgekühlt und beurteilt. Die erhaltenen Lackierungen zeigten einen sehr guten Verlauf, deckten die Struktur der Elektrotauchlackierung sehr gut ab und zeigten eine gute Zwischenhaftung zur Elektrotauchlackgrundierung.

Um die Haftung von reaktiven Scheibenklebstoffen auf den mit den erfindungsgemäßen wäßrigen Lacken hergestellten Lackschichten zu prüfen, wird ein Teil der Oberfläche der lackierten Stahlbleche unmittelbar nach dem Abkühlen mit Tesa-Band 4657 der Firma Beiersdorf AG abgeklebt. Die so behandelten Stahlbleche werden 72 Stunden bei Raumtemperatur gelagert und anschließend dreimal mit einem handelsüblichen Decklack überlackiert, wobei die überlackierten Decklacke selbstverständlich jeweils auch eingebrannt werden. Nach einer Wartezeit von 72 Stunden wird das Klebeband im spitzen Winkel abgezogen, wobei auf der Haftfläche keine Rückstände beobachtet werden. Auf die auf diese Weise freigelegte Füllerschicht wird eine feuchtigkeitsreaktive Klebemasse (Betaseal® L 1751, einkomponentige Scheibenverklebungs- und Dichtungsmasse auf Polyurethanbasis von Gurit Essex) in Form einer Raupe von 10 mm Durchmesser und mindestens 200 mm Länge aufgebracht und mit einem Spatel so auf die Lackoberfläche gepreßt, daß die Raupe noch eine Höhe von ca. 5 mm aufweist. Die so behandelten Bleche werden 7 Tage bei Normklima (DIN 50014, 23/50-2) gelagert. Anschließend werden sie in mit deionisiertem Wasser angefeuchtete Watte eingepackt, mit einer Aluminiumfolie umhüllt und in eine Polyethylenfolie eingeschweißt. Die derartig verpackten Bleche werden 7 Tage lang bei 70 °C und anschließend 16 Stunden lang bei - 25 °C gelagert. Danach werden die Bleche, sobald sie wieder Raumtemperatur angenommen haben, ausgepackt und 24 Stunden bei Raumtemperatur gelagert. Schließlich wird die Haftung der Klebstoffraupe durch Anschneiden der Raupe bis auf die Haftfläche und gleichzeitiges Abziehen der Klebstoffraupe geprüft. Dabei wird eine ausgezeichnete Haftung der Klebstoffraupe auf den mit den erfindungsgemäßen Lacken hergestellten Lackierungen beobachtet.

### 5. Vergleichsversuch

Es wird ein wäßriger Lack gemäß der Offenbarung der DE-A-40 05 961 hergestellt, indem in der unter 3. beschriebenen Herstellvorschrift an Stelle einer wäßrigen Dispersion eines erfindungsgemäß hergestellten Polyurethanharzes 34,0 Gewichtsteile einer wäßrigen Polyurethanharzdispersion, die nach der nachfolgend beschriebenen Herstellvorschrift hergestellt wird, eingesetzt werden. Mit dem so hergestellten wäßrigen Vergleichslack werden wie unter 4. beschrieben Lackfilme hergestellt und den unter 4. beschriebenen Prüfungen unterzogen. Dabei wird festgestellt, daß die Klebstoffraupe auf der mit dem Vergleichslack hergestellten Lackierung wesentlich schlechter haftet als auf der mit den erfindungsgemäßen wäßrigen Lacken hergestellten Lackierungen.

### 5.1 Herstellung der im Vergleichslack eingesetzten wäßrigen Polyurethanharzdispersion

In einen trockenen Reaktionskessel mit Thermometer und Rückflußkühler werden unter Stickstoff 480,3 g einer 73 %igen Lösung eines Polyesterpolyols (Säurezahl: 3,5 bis 4,0, hergstellt aus 39,5 Gewichtsteilen dimerisierter Fettsäure (Pripol® 1013, Hersteller: Unichema) 21,7 Gewichtsteilen Hexandiol-1,6 und 11,7 Gewichtsteilen Isophthalsäure) in Methylethylketon, 31,4 g Dimethylolpropionsäure, 169,1 g Dicyclohexylmethandiisocyanat (Desmodur® W, Hersteller: Bayer AG), 6,5 g Neopentylglykol und 56,2 g Methylethylketon eingewogen und auf 85 °C erwärmt. Diese Temperatur wird so lange gehalten, bis ein NCO-Gehalt von 1,11 % erreicht ist. Nach Abkühlen auf 78 °C wird mit 17,8 g Trimethylolpropan und 91,3 g Methylethylketon versetzt. Sobald eine mit N-Methylpyrrolidon im Gewichtsverhältnis von 1:1 verdünnte Probe der Reaktionsmischung eine Viskosität zwischen 12 und 15 dPas aufweist werden 57,6 g Butyldiglykol zu dem Reaktionsgemisch gegeben und das Reaktionsgemisch noch eine Stunde lang bei 78 °C gehalten. Zur Überführung des so hergstellten Polyurethanharzes in eine wasserverdünnbare Form werden 11,7 g Dimethylethanolamin und 1020 g destilliertes Wasser zugegeben. Aus der so erhaltenen wäßrigen Dispersion wird anschließend das Methylethylketon bei 50 bis 60 °C im Vakuum abdestilliert. Dann wird der pH-Wert der Dispersion mit Dimethylethanolamin auf 7,2 und der Farbstoffgehalt der Dispersion mit destilliertem Wasser auf 36,7 Gew.-% eingestellt.

## Patentansprüche

1. Wäßrige, wenigstens ein wasserverdünnbares Polyurethanharz als Bindemittel enthaltende Lacke, dadurch gekennzeichnet, daß das wasserverdünnbare Polyurethanharz herstellbar ist, indem in einer ersten Stufe
(a) ein Diisocyanat oder ein Gemisch aus Diisocyanaten und
(b) eine Verbindung, die mindestens eine gegenüber Isocyanatgruppen reaktive und mindestens eine zur Anionenbildung befähigte saure Gruppe im Molekül aufweist oder ein Gemisch aus solchen Verbindungen und
(c) gegebenenfalls ein Polyester- und/oder Polyetherpolyol mit einem zahlenmittleren Molekulargewicht von 400 bis 5000 oder ein Gemisch aus solchen Polyester- und/oder Polyetherpolyolen und
(d) gegebenfalls ein Polyol mit einem zahlenmittleren Molekulargewicht von 60 bis 399 oder ein Gemisch aus solchen Polyolen
zu einem isocyanatgruppenhaltigen Präpolymeren (I) umgesetzt werden, wobei die Komponenten (a), (b), (c) und (d) in einem solchen Mengenverhältnis miteinander umgesetzt werden, daß die Isocyanatgruppen und die gegenüber Isocyanatgruppen reaktiven Gruppen in einem Äguivalentverhältnis von 1,04:1,00 bis 10,00:1,00 vorliegen und das aus (a), (b), (c), (d), (e), (f) und (g) hergestellte Polyurethanharz eine Säurezahl von 18 bis 70 aufweist, in einer zweiten Stufe ein Teil der im Präpolymeren (I) enthaltenen freien Isocyanatgruppen mit
(e) einem Blockierungsmittel oder einer Mischung aus Blockierungsmitteln
umgesetzt wird, so daß ein blockierte Isocyanatgruppen enthaltendes Präpolymer (II) entsteht, wobei die Komponente (e) in einer solchen Menge eingesetzt wird, daß das Präpolymer (II) im statistischen Mittel mindestens noch eine freie Isocyanatgruppe pro Molekül enthält, das Präpolymer (II) mit
(f) 2,0 - 400 Gew.-%, bezogen auf die Menge an Präpolymer (II), eines aus einer Mischung aus Polyisocyanaten mit im statistischen Mittel mehr als 2,0 Isocyanatgruppen pro Molekül, welche frei von zur Anionenbildung befähigten sauren Gruppen sind, und der Komponente (e) hergestellten teilblockierten Polyisocyanates
vermischt wird, die Mischung aus Präpolymer (II) und Komponente (f) mit
(g) einer Verbindung, die mindestens eine primäre oder sekundäre Aminogruppe und mindestens eine Hydroxylgruppe im Molekül enthält oder einer Mischung aus solchen Verbindungen
zu einem Polyurethanharz umgesetzt wird, wobei die Komponente (g) in einer solchen Menge eingesetzt wird, daß die freien Isocyanatgruppen der Mischung aus Präpolymer (II) und Komponente (f), die Aminogruppen der Komponente (g) und die Hydroxylgruppen der Komponente (g) in einem Äquivalentverhältnis von 1,00;0,15 bis 5,00:0,15 bis 5,00 stehen und schließlich das so hergestellte Polyurethanharz durch zumindest teilweise Neutralisation der zur Anionenbildung befähigten sauren Gruppen in ein wasserverdünnbares Polyurethanharz überführt wird.

2. wäßrige Lacke nach Anspruch 1, dadurch gekennzeichnet, daß die Komponenten (a), (b), (c) und (d) in einem solchen Mengenverhältnis miteinander umgesetzt werden, daß die Isocyanatgruppen und die gegenüber Isocyanatgruppen reaktiven Gruppen in einem Äquivalentverhältnis von 1,15:1,00 bis 6,00:1,00 vorliegen und das aus (a), (b), (c), (d), (e), (f) und (g)hergestellte Polyurethanharz eine Säurezahl von 18 bis 35 aufweist.

3. Wäßrige Lacke nach Anspruch 1 oder 2, dadurch gekennzeichnet, daß die freien Isocyanatgruppen der Mischung aus Präpolymer (II) und Komponente (f), die Aminogruppen der Komponente (g) und die Hydroxylgruppen der Komponente (g) in einem Äquivalentverhältnis von 1,00:0,25 bis 3,00:0,25 bis 3,00 stehen.

4. Wäßrige Lacke nach Anspruch 3, dadurch gekennzeichnet, daß das Äquivalentverhältnis 1,00:0,33 bis 2,00:0,33 bis 2,00 beträgt.

5. Verfahren zur Lackierung von Automobilkarosserien, bei dem eine Elektrotauchlackschicht, eine Füllerschicht und ein oder zwei Decklackschichten übereinander lackiert und in mehreren Einbrennschnitten nacheinander eingebrannt werden, dadurch gekennzeichnet, daß zur Herstellung der Füllerschicht ein wäßriger Lack nach einem der Ansprüche 1 bis 4 eingesetzt wird.

6. Verwendung von wäßrigen Lacken nach einem der Ansprüche 1 bis 4 zur Herstellung der Füllerschicht in einem Verfahren nach Anspruch 5.

## Claims

1. Aqueous coating materials containing at least one water-dilutable polyurethane resin as binder, characterized in that the water-dilutable polyurethane resin can be prepared by reacting, in a first step,
(a) a diisocyanate or a mixture of diisocyanates and
(b) a compound whose molecule contains at least one group which is reactive toward isocyanate groups and at least one acidic group which is capable of forming anions, or a mixture of such compounds, and
(c) if desired, a polyester- and/or polyetherpolyol having a number-average molecular weight of from 400 to 5000, or a mixture of such polyester- and/or polyether-polyols, and
(d) if desired, a polyol having a number-average molecular weight of from 60 to 399, or a mixture of such polyols,
to give an isocyanato-containing prepolymer (I), components (a), (b), (c) and (d) being reacted with one another in a proportion such that the isocyanate groups and the groups which are reactive toward isocyanate groups are present in a ratio of equivalents of from 1.04:1.00 to 10.00:1.00 and the polyurethane resin prepared from (a), (b), (c) , (d) , (e), (f) and (g) has an acid number of from 18 to 70; in a second stage some of the free isocyanate groups present in the prepolymer (I) are reacted with
(e) a blocking agent or a mixture of blocking agents
so as to form a prepolymer (II) containing blocked isocyanate groups, component (e) being employed in a quantity such that the prepolymer (II) still contains on average at least one free isocyanate group per molecule, the prepolymer (II) is mixed with
(f) 2.0 - 400% by weight, based on the quantity of prepolymer (II), of a partially blocked polyisocyanate prepared from a mixture of polyisocyanates having on average more than 2.0 isocyanate groups per molecule, which are free from acidic groups capable of forming anions, and prepared from component (e),
the mixture of prepolymer (II) and component (f) is reacted with
(g) a compound containing at least one primary or secondary amino group and at least one hydroxyl group in the molecule, or a mixture of such compounds,
to give a polyurethane resin, component (g) being employed in a quantity such that the free isocyanate groups of the mixture of prepolymer (II) and component (f), the amino groups of component (g) and the hydroxyl groups of component (g) are in a ratio of equivalents of from 1.00:0.15 to 5.00:0.15 to 5.00; and finally the polyurethane resin prepared in this way is converted into a water-dilutable polyurethane resin by at least partial neutralization of the acidic groups capable of forming anions.

2. Aqueous coating materials according to Claim 1, characterized in that components (a), (b), (c) and (d) are reacted with one another in a ratio such that the isocyanate groups and the groups which are reactive toward isocyanate groups are present in a ratio of equivalents of from 1.15:1.00 to 6.00:1.00 and the polyurethane resin prepared from (a) , (b) , (c) , (d) , (e) , (f) and (g) has an acid number of from 18 to 35.

3. Aqueous coating materials according to Claim 1 or 2, characterized in that the free isocyanate groups of the mixture of prepolymer (II) and component (f), the amino groups of component (g) and the hydroxyl groups of component (g) are in a ratio of equivalents of from 1.00:0.25 to 3.00:0.25 to 3.00.

4. Aqueous coating materials according to Claim 3, characterized in that the ratio of equivalents is from 1.00:0.33 to 2.00:0.33 to 2.00.

5. Process for the finishing of car bodies, in which an electrodeposition coat, a filler coat and one or two topcoats are applied over one another and are baked in succession in two or more baking steps, charac-terized in that an aqueous coating material according to one of Claims 1 to 4 is employed in order to produce the filler coat.

6. Use of aqueous coating materials according to one of Claims 1 to 4 for the production of the filler coat in a process according to Claim 5.

## Revendications

1. Peintures aqueuses comprenant au moins une résine de polyuréthane diluable à l'eau en tant que liant, caractérisées en ce que la résine de polyuréthane diluable à l'eau peut être préparée en faisant réagir, dans une première étape,
(a) un diisocyanate ou un mélange de diisocyanates et
(b) un composé renfermant dans la molécule au moins un groupe acide réactif vis-à-vis des groupes isocyanate et au moins un groupe acide capable de former des anions, ou un mélange de tels composés, et
(c) éventuellement un polyester- et/ou polyétherpolyol ayant un poids moléculaire moyen en nombre de 400 à 5 000 ou un mélange de tels polyester- et/ou polyéther-polyols, et
(d) éventuellement un polyol ayant un poids moléculaire moyen en nombre de 60 à 399 ou un mélange de tels polyols,
pour donner un prépolymère renfermant des groupes isocyanate (I), les composants (a), (b), (c) et (d) étant mis à réagir les uns avec les autres en une proportion telle que les groupes isocyanate et les groupes réactifs vis-à-vis des groupes isocyanate soient présents en un rapport d'équivalents de 1,04 : 1,00 à 10,00 : 1,00 et que la résine de polyuréthane préparée à partir de (a) , (b) , (c) , (d) , (e) , (f) et (g) présente un indice d'acide de 18 à 70 ; dans une deuxième étape, une partie des groupes isocyanate libres présents dans le prépolymère (I) est mise à réagir avec
(e) un agent de blocage ou un mélange d'agents de blocage,
de telle sorte qu'il se forme un prépolymère (II) renfermant des groupes isocyanate bloqués, le composant (e) étant utilisé en une quantité telle que le prépolymère (II) renferme en moyenne statistique au moins encore un groupe isocyanate libre par molécule, le prépolymère (II) est mélangé avec
(f) de 2,0 à 400% en poids, par rapport à la quantité de prépolymère (II), d'un polyisocyanate partiellement bloqué préparé à partir d'un mélange de polyisocyanates ayant en moyenne statistique plus de 2,0 groupes isocyanate par molécule et dépourvus de groupes acides capables de former des anions, et du composant (e),
le mélange du prépolymère (II) et du composant (f) est mis à réagir avec
(g) un composé renfermant au moins un groupe amino primaire ou secondaire et au moins un groupe hydroxy dans la molécule, ou un mélange de tels composés,
pour donner une résine de polyuréthane, le composant (g) étant utilisé en une quantité telle que les groupes isocyanate libres du mélange du prépolymère (II) et du composant (f), les groupes amino du composant (g) et les groupes hydroxy du composant (g) soient présents en un rapport d'équivalents de 1,00 : 0,15 à 5,00 : 0,15 à 5,00 et enfin, la résine de polyuréthane ainsi préparée est transformée en une résine de polyuréthane diluable à l'eau par neutralisation au moins partielle des groupes acides capables de former des anions.

2. Peintures aqueuses selon la revendication 1, caractérisées en ce que les composants (a) , (b) , (c) et (d) sont mis à réagir les uns avec les autres en une proportion telle que les groupes isocyanate et les groupes réactifs vis-à-vis des groupes isocyanate soient présents en un rapport d'équivalents de 1,15 : 1,00 à 6,00 : 1,00 et que la résine de polyuréthane préparée à partir de (a) , (b) , (c) , (d) , (e) , (f) et (g) présente un indice d'acide de 18 à 35.

3. Peintures aqueuses selon la revendication 1 ou 2, caractérisées en ce que les groupes isocyanate libres du mélange du prépolymère (II) et du composant (f), les groupes amino du composant (g) et les groupes hydroxy du composant (g) sont présents en un rapport d'équivalents de 1,00 : 0,25 à 3,00 : 0,25 à 3,00.

4. Peintures aqueuses selon la revendication 3, caractérisées en ce que le rapport d'équivalents est de 1,00 : 0,33 à 2,00 : 0,33 à 2,00.

5. Procédé de revêtement de carrosseries d'automobiles, dans lequel une couche de peinture électrophorétique, une couche de charge et une ou deux couches de finition sont appliquées les unes sur les autres et sont cuites successivement en plusieures étapes de cuisson, caractérisé en ce que pour produire la couche de charge, on utilise une peinture aqueuse selon l'une quelconque des revendications 1 à 4.

6. Utilisation de peintures aqueuses selon l'une quelconque des revendications 1 à 4 en vue de produire la couche de charge dans un procédé selon la revendication 5.
